# EUROPÄISCHE PATENTSCHRIFT

(11) **EP 0 640 816 B1**
(45) Veröffentlichungstag und Bekanntmachung des Hinweises auf die Patenterteilung: **23.02.2000**
(21) Anmeldenummer: 94113219.3
(22) Anmeldetag: 24.08.1994
(51) Int. Cl.: G01K 7/22, H01C 7/06

(54) **Hybrid-Thermistortemperaturfühler**
Hybrid thermistor temperature sensor
Capteur de température à thermistor hybride

(30) Priorität: 26.08.1993 DE 4328791
(43) Veröffentlichungstag der Anmeldung: 01.03.1995
(73) Patentinhaber: SIEMENS MATSUSHITA COMPONENTS GmbH & CO. KG, 81541 München (DE)
(72) Erfinder: Kloiber, Gerald, Ing., A-8073 Feldkirchen (AT); Schrank, Franz, Dr. Dipl.-Ing., A-8042 Graz (AT)
(74) Vertreter: Zedlitz, Peter

(56) Entgegenhaltungen:
- EP-A- 0 125 366
- EP-A- 0 532 890
- US-A- 4 141 020
- PATENT ABSTRACTS OF JAPAN vol. 16, no. 275 (E-1219) 19. Juni 1992 & JP-A-04 065 824 (FUJITSU LTD) 2. März 1992
- PATENT ABSTRACTS OF JAPAN vol. 17, no. 182 (P-1518) 8. April 1993 & JP-A-04 335 648 (DAINIPPON INK & CHEM INC) 24. November 1992
- Joel R. Shappirio, "Diffusion Barriers in Advanced Semiconductor Device Technology", Solid State Technology 28 (1985) 161-166

## Beschreibung

Die vorliegende Erfindung betrifft einen Hybrid-Thermistortemperaturfühler nach dem Oberbegriff des Patentanspruchs 1.

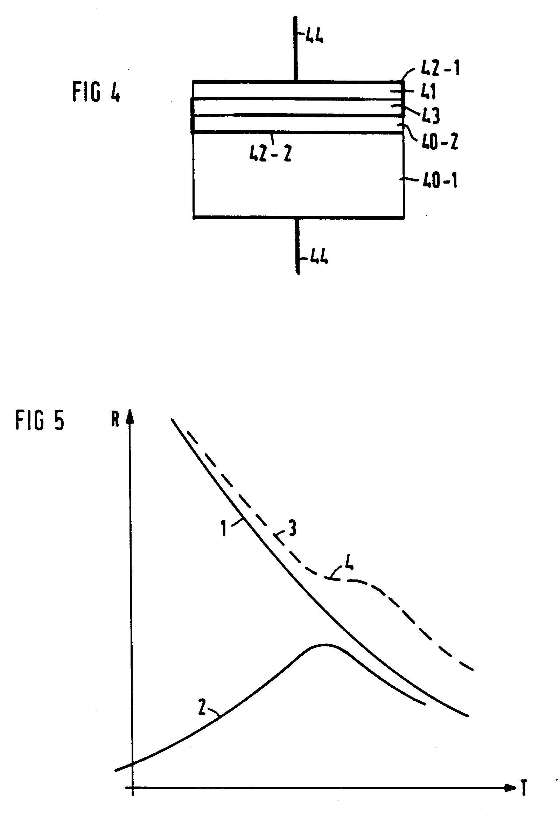

Thermistortemperaturfühler in Form eines Zweipols aus temperaturabhängigen in thermischem und elektrischem Kontakt miteinander stehenden Widerständen mit positivem und negativem Temperaturkoeffizienten sind beispielsweise aus der EP 0 532 890 A1 bekannt. Bei einem derartigen bekannten Thermistortemperaturfühler handelt es sich um eine elektrische Reihenschaltung eines temperaturabhängigen Widerstandes mit negativem Temperaturkoeffizienten und eines temperaturabhängigen Widerstandes mit positiven Temperaturkoeffizienten, das heißt eines Heißleiters und Kaltleiters. Die Temperatur-/Widerstandscharakteristik dieses Thermistortemperaturfühlers ist insgesamt negativ und besitzt ein Plateau, das um eine vorgegebene Temperatur zentriert ist. Wird ein derartiger Thermistortemperaturfühler als Temperaturfühler für ein Motorfahrzeug benutzt, so ist das Plateau um die zu erfassende normale Arbeitstemperatur des Motorfahrzeuges zentriert, so daß Toleranzen im Fühlersystem und normale Schwankungen der Arbeitstemperatur durch eine Fahrzeug-Temperaturanzeige nicht erfaßt werden. Es werden lediglich abnormale Temperaturänderungen aufgrund von Fehlern oder Überlastbedingungen angezeigt. Eine Temperatur-Widerstandscharakteristik des erläuterten Thermistortemperaturfühlers ist in Figur 5 dargestellt. Im Diagramm nach dieser Figur ist der Widerstand R des Thermistortemperaturfühlers (in logarithmischem Maßstab) über der Temperatur T in °C aufgetragen. Eine Kurve 1 ist die Charakteristik eines Heißleiters, während eine Kurve 2 die Charakteristik eines Kaltleiters ist. In an sich bekannter Weise geht die Charakteristik 2 des Kaltleiters jenseits eines Widerstandsmaximums in einen Kennlinienbereich über, in dem der Kaltleiter Heißleitereigenschaften besitzt. Durch Superposition der Charakteristiken 1 und 2 für den Heißleiter bzw. Kaltleiter entsteht eine Charakteristik 3 des Thermistortemperaturfühlers. Arbeitet der in Reihe zum Heißleiter liegende Kaltleiter im Betriebstemperaturbereich des Thermistortemperaturfühlers jenseits des Widerstandsmaximums der Charakteristik 2, so entsteht in der Thermistor-Temperaturfühlercharakteristik 3 in einem vorgebbaren Temperaturbereich ein konstanter Widerstandsverlauf bzw. ein Plateau 4, so daß die Eigenschaften erreicht werden, wie sie für Temperaturschwankungen oben erläutert wurden.

Weiterhin sind generell Thermistortemperaturfühler mit Kombinationen von mehr als zwei temperaturabhängigen Widerständen, beispielsweise mit einem Heißleiter und zwei Kaltleitern aus der EP-PS 0 125 366 bekannt.

Aus "Solid State Technology 28", Oct. 1985, Seiten 161 bis 166 ist es in der Halbleitertechnologie bekannt, insbesondere besondere für integrierte Halbleiterschaltkreise Diffusionsbarrieren in Form verschiedener Nitride, Karbide und Boride vorzusehen.

Für die elektrische Kopplung einzelner temperaturabhängiger Widerstände in Hybrid-Thermistortemperaturfühlern ist es wichtig, daß sowohl die Übergangswiderstände so niederohmig und damit so verlustarm wie möglich sind als auch eine Diffusion von Stoffen einzelner temperaturabhängiger Widerstände ineinander zu vermeiden.

Auf die Problematik einer niederohmigen Kopplung von Thermistoren ist den beiden erstgenannten Dokumenten nichts zu entnehmen. Darüber hinaus ist diesen Dokumenten auch nicht entnehmbar, daß Diffusionssperren im vorgenannten Sinne notwendig sind.

Der vorliegenden Erfindung liegt daher die Aufgabe zugrunde, einen Hybrid-Thermistortemperaturfühler der in Rede stehenden Art anzugeben, bei dem Übergangswiderstände zwischen den einzelnen Widerständen mit positivem und negativem Temperaturkoeffizienten so niederohmig wie möglich sind und dabei gleichzeitig Diffusionen von Materialien der einzelnen Widerstände ineinander zu vermeiden.

Diese Aufgabe wird bei einem Hybrid-Thermistortemperaturfühler der eingangs genannten Art erfindungsgemäß durch die Merkmale des kennzeichnenden Teils des Patentanspruchs 1 gelöst.

Weiterbildungen der Erfindung sind Gegenstand von Unteransprüchen.

Die Erfindung wird im folgenden anhand von Ausführungsbeispielen gemäß den Figuren der Zeichnung näher erläutert. Es zeigen:
- Figuren 1 bis 4: jeweils eine Ausführungsform eines erfindungsgemäßen Hybrid-Thermistortemperaturfühlers; und
- Figur 5: die bereits erläuterte Temperatur-/Widerstandscharakteristik eines bekannten Hybrid-Thermistortemperaturfühlers.

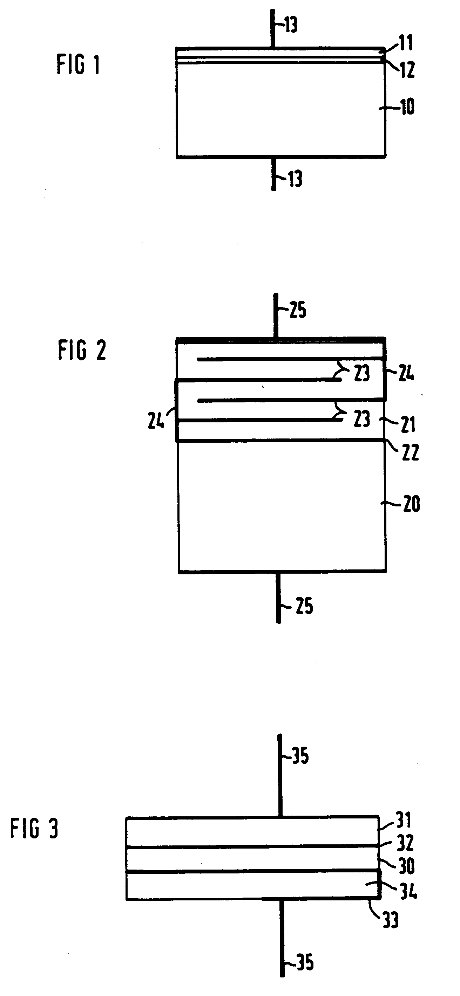

Bei der Ausführungsform nach Figur 1 eines erfindungsgemäßen Hybrid-Thermistortemperaturfühlers ist auf einem temperaturabhängigen Widerstand 10 mit negativem Temperaturkoeffizienten über eine Elektrode 12 ein temperaturabhängiger Widerstand 11 mit positvem Temperaturkoeffizienten vorgesehen. Über nicht näher bezeichnete Anschlußelektroden ist der Thermistortemperaturfühler mit Anschlußdrähten 13 versehen. Es handelt sich somit um einen elektrischen Zweipol, der über die Anschlußdrähte 13 von außen elektrisch zugänglich ist.

Erfindungsgemäß ist nun die Elektrode 12 aus einem Material hergestellt, das eine niederohmige Kontaktierung zwischen Heißleiter 10 und Kaltleiter 11 gewährleistet und eine Diffusionssperre für eine gegenseitige Diffusion von Bestandteilen der kontaktierten temperaturabhängigen Widerstände 10 und 11 in den jeweils anderen temperaturabhängigen Widerstand bildet.

Bei der Herstellung eines derartigen Thermistortemperaturfühlers wird der Heißleiter 10 nach an sich bekannten Technologien hergestellt. Es handelt sich dabei beispielsweise um eine Scheiben- oder Wavertechnologie, wobei die Geometrie ohne Einfluß auf die weiteren Herstellungsschritte ist. Auf diesen Heißleiter 10 wird in einer Schichttechnologie, beispielsweise durch Sputtern, CVD, MOCVD, Laser-Ablation oder Siebdruck die verbindende Elektrode 12 aufgebracht. Auf diese Elektrode 12 wird wiederum in einer der obengenannten Schichttechniken der Kaltleiter 11 aufgebracht.

Als Material für die Elektrode 12 kommen elektrisch leitende Oxid-Nitride und/oder Oxide in Betracht, wobei insbesondere ein Material aus der Gruppe TiON, TiAlON oder InSn-Oxid Verwendung findet.

Die beidseitige Kontaktierung des Hybrid-Thermistortemperaturfühlers erfolgt zweckmäßiger Weise durch Sputtern von Cr-Ni-Ag-Elektroden.

Kaltleiter 11 wird zur Realisierung eines notwendigen kleinen ohmschen Widerstandes vorzugsweise als dünne Schicht ausgebildet.

Bei der Ausführungsform eines Hybrid-Thermistortemperaturfühlers nach Figur 2 ist eine Kombination eines temperaturabhängigen Widerstandes 20 mit negativem Temperaturkoeffizienten - Heißleiter - und eines temperaturabhängigen Widerstandes 21 mit positivem Temperaturkoeffizienten - Kaltleiter - vorgesehen, die über eine Elektrode 22 elektrisch miteinander gekoppelt sind. Bei dieser Ausführungsform ist der Kaltleiter 21 als Vielschichtelement ausgebildet, dessen Einzelschichten jeweils durch Innenelektroden 23 voneinander getrennt sind, die ihrerseits alternierend durch Metallkontaktstreifen 24 elektrisch miteinander verbunden sind. Der gesamte Thermistortemperaturfühler ist wiederum über Anschlußdrähte 25 und nicht näher bezeichnetete Kontaktelektroden von außen elektrisch zugänglich.

Für die Herstellung eines derartigen Thermistortemperaturfühlers nach Figur 2 kommen ebenfalls die obengenannten Technologien in Betracht, was insbesondere auch für die erfindungsgemäße Ausgestaltung der den Heißleiter 20 und den Kaltleiter 21 elektrisch koppelnden Elektrode 22 gilt.

Bei der Ausführungsform eines erfindungsgemäßen Thermistortemperaturfühlers nach Figur 3 ist ein temperaturabhängiger Widerstand 30 mit negativem Temperaturkoeffizienten - Heißleiter - auf einem elektrisch isolierenden Substrat 34 und über eine Elektrode 32 der oben erläuterten erfindungsgemäßen Ausbildung ein temperaturabhängiger Widerstand 31 mit positivem Temperaturkoeffizienten - Kaltleiter - vorgesehen. Zur Kontaktierung des Heißleiters 30 ist um das Substrat 34 eine Elektrode 33 herumgeführt, wobei die elektrische Zugänglichkeit von außen wiederum durch Anschlußdrähte 35 gewährleistet ist.

Auch dabei erfolgt die Herstellung mittels der oben bereits erläuterten Technologien, wobei insbesondere für die Elektroden 32 und 33 die Ausführungen zur Elektrode 12 nach Figur 1 gelten.

Figur 4 zeigt eine Ausführungsform eines erfindungsgemäßen Thermistortemperaturfühlers mit zwei temperaturabhängigen Widerständen 40-1 und 40-2 mit negativem Temperaturkoeffizienten - Heißleiter - und einem temperaturabhängigen Widerstand 41 mit positivem Temperaturkoeffizienten - Kaltleiter -, wobei zwischen dem Heißleiter 40-2 und dem Kaltleiter 41 ein Isolator 43 vorgesehen ist. Die Kontaktierung erfolgt in der dargestellten Art mittels Elektroden 42-1 und 42-2, welche in geeigneter Weise um die temperaturabhängigen Widerstandselemente 40-2 und 41 sowie den Isolator 43 herum geführt sind. Die elektrische Zugänglichkeit von außen erfolgt wiederum über Anschlußdrähte 44. Auch bei dieser Ausführungsform gelten für die Herstellung die Ausführungen zu den oben erläuterten Ausführungsformen nach den Figuren 1 bis 3.

## Patentansprüche

1. Hybrid-Thermistortemperaturfühler in Form eines Zweipols aus temperaturabhängigen, in thermischem und elektrischem Kontakt miteinander stehenden Widerständen (10, 11; 20, 21; 30, 31; 40-1, 40-2, 41) wobei jeder der Widerstände (10, 11; 20, 21; 30, 31; 40-1, 40-2, 41) einen positiven oder negativen Temperaturkoeffizienten aufweist, dessen Temperatur-/Widerstandscharakteristik in einem vorgegebenen Temperaturbereich einen konstanten Widerstandsverlauf besitzt und in dem wenigstens zwei temperaturabhängige Widerstände (10, 11; 20, 21; 30, 31; 40-1, 40-2, 41) über wenigstens eine Elektrode (12; 22, 24; 32; 42-1, 42-2) elektrisch miteinander in Reihe geschaltet sind,
**dadurch gekennzeichnet,**
daß für die Elektrode (12; 22, 24; 32; 42-1, 42-2) ein elektrisch leitendes Material aus einem Oxid-Nitrid oder Oxid Verwendung findet, das eine niederohmige Kontaktierung der temperaturunabhängigen Widerstände (10, 11; 20, 21; 30, 31; 40-1, 40-2, 41) gewährleistet und eine Diffusionssperre für eine gegenseitige Diffusion von Bestandteilen der durch sie kontaktierten temperaturabhängigen Widerstände in den jeweils anderen temperaturabhängigen Widerstand bildet.

2. Thermistortemperaturfühler nach Anspruch 1,
**dadurch gekennzeichnet,**
daß als Elektrodenmaterial ein Material aus der Gruppe TiON, TiAlON, InSn-Oxid Verwendung findet.

3. Thermistortemperaturfühler nach Anspruch 1 oder 2, **gekennzeichnet durch**
eine Reihenschaltung eines temperaturabhängigen Widerstandes (10; 20; 30) mit negativem Temperaturkoeffizienten und eines Widerstandes (11; 21; 31) mit positivem Temperaturkoeffizienten über eine zwischen ihnen angeordnete Elektrode (12; 22; 32).

4. Thermistortemperaturfühler nach Anspruch 3,
**dadurch gekennzeichnet,**
daß der Widerstand (10; 20) mit negativem Temperaturkoeffizienten als Substrat für die Elektrode (12; 22) und den Widerstand (11; 21) mit positivem Temperaturkoeffizienten dient.

5. Thermistortemperaturfühler nach Anspruch 3 oder 4,
**dadurch gekennzeichnet,**
daß der Widerstand (11; 31; 41) mit positivem Temperaturkoeffizienten als einstückige Scheibe ausgebildet ist.

6. Thermistortemperaturfühler nach Anspruch 3 oder 4, **dadurch gekennzeichnet,**
daß der Widerstand (21) mit positivem Temperaturkoeffizienten als Vielschichtelement ausgebildet ist.

7. Thermistortemperaturfühler nach einem der Ansprüche 1 oder 2,
**dadurch gekennzeichnet,**
daß eine Kombination aus Widerständen (30, 31) mit negativem oder positivem Temperaturkoeffizienten auf einem isolierenden Substrat (34) vorgesehen ist.

8. Thermistortemperaturfühler nach Anspruch 1 oder 2, **gekennzeichnet durch**
eine Kombination aus mindestens drei Widerständen (40-1, 40-2, 41), wobei jeder der Widerstände (40-1, 40-2, 41) einen negativen oder positiven Temperaturkoeffizienten aufweist, die über Elektroden (42-1, 42-2) elektrisch miteinander gekoppelt sind.

9. Thermistortemperaturfühler nach Anspruch 8,
**gekennzeichnet durch**
eine Kombination aus zwei Widerständen (40-1, 40-2) mit negativem Temperaturkoeffizienten und einem Widerstand (41) mit positivem Temperaturkoeffizienten, die über Elektroden (42-1, 42-2) elektrisch so miteinander gekoppelt sind, daß zu einer Parallelschaltung eines Widerstandes (41) mit positivem Temperaturkoeffizienten und eines Widerstandes (40-2) mit negativem Temperaturkoeffizienten ein Widerstand (40-1) mit negativem Temperaturkoeffizienten in Reihe liegt.

10. Thermistortemperaturfühler nach Anspruch 9,
**dadurch gekennzeichnet,**
daß der in Reihe geschaltete Widerstand (40-1) mit negativem Temperaturkoeffizienten als Substrat für die Parallelschaltung aus dem Widerstand (40-2) mit negativem Temperaturkoeffizienten und dem Widerstand (41) mit positivem Temperaturkoeffizienten, der parallel geschaltete Widerstand (40-2) mit negativem Temperaturkoeffizienten auf dem als Substrat dienenden in Reihe geschaltetem Widerstand (40-1) mit negativem Temperaturkoeffizienten und der Widerstand (41) mit positivem Temperaturkoeffizienten über einen Isolator (43) auf dem parallel geschaltetem Widerstand (40-2) mit negativem Temperaturkoeffizienten vorgesehen ist.

## Claims

1. Hybrid thermistor temperature sensor in the form of a two-terminal network comprising temperature-dependent resistors (10, 11; 20, 21; 30, 31; 40-1, 40-2, 41) in thermal and electrical contact with one another, each of the resistors (10, 11; 20, 21; 30, 31; 40-1, 40-2, 41) having a positive or negative temperature coefficient whose temperature/resistance characteristic has a constant resistance curve in a predetermined temperature range, and in which at least two temperature-dependent resistors (10, 11; 20, 21; 30, 31; 40-1, 40-2, 41) are electrically connected in series with one another via at least one electrode (12; 22, 24; 32; 42-1, 42-2), characterized in that, for the electrode (12; 22, 24; 32; 42-1, 42-2), an electrically conductive material is used made of an oxide-nitride or oxide which ensures low-impedance contact for the temperature-dependent resistors (10, 11; 20, 21; 30, 31; 40-1, 40-2, 41) and forms a diffusion barrier for reciprocal diffusion of components of the temperature-dependent resistors with which it makes contact into the respectively other temperature-dependent resistor.

2. Thermistor temperature sensor according to Claim 1, characterized in that the electrode material used is a material from the group TiON, TiAlON, InSn oxide.

3. Thermistor temperature sensor according to Claim 1 or 2, characterized by a series circuit comprising a temperature-dependent resistor (10; 20; 30) having a negative temperature coefficient and a resistor (11; 21; 31) having a positive temperature coefficient with an electrode (12; 22; 32) arranged between them.

4. Thermistor temperature sensor according to Claim 3, characterized in that the resistor (10; 20) having a negative temperature coefficient serves as a substrate for the electrode (12; 22) and the resistor (11; 21) having a positive temperature coefficient.

5. Thermistor temperature sensor according to Claim 3 or 4, characterized in that the resistor (11; 31; 41) having a positive temperature coefficient is designed as an integral disc.

6. Thermistor temperature sensor according to Claim 3 or 4, characterized in that the resistor (21) having a positive temperature coefficient is designed as a multilayer element.

7. Thermistor temperature sensor according to one of Claims 1 and 2, characterized in that a combination of resistors (30, 31) having a negative or a positive temperature coefficient is provided on an insulating substrate (34).

8. Thermistor temperature sensor according to Claim 1 or 2, characterized by a combination of at least three resistors (40-1, 40-2, 41), each of the resistors (40-1, 40-2, 41) having a negative or a positive temperature coefficient, which are electrically coupled to one another via electrodes (42-1, 42-2).

9. Thermistor temperature sensor according to Claim 8, characterized by a combination of two resistors (40-1, 40-2) having a negative temperature coefficient and a resistor (41) having a positive temperature coefficient which are electrically coupled to one another via electrodes (42-1, 42-2) such that a parallel circuit comprising a resistor (41) having a positive temperature coefficient and a resistor (40-2) having a negative temperature coefficient has a resistor (40-1) having a negative temperature coefficient connected in series with it.

10. Thermistor temperature sensor according to Claim 9, characterized in that the series-connected resistor (40-1) having a negative temperature coefficient is provided as a substrate for the parallel circuit comprising the resistor (40-2) having a negative temperature coefficient and the resistor (41) having a positive temperature coefficient, the parallel-connected resistor (40-2) having a negative temperature coefficient is provided on the series-connected resistor (40-1) having a negative temperature coefficient, which serves as a substrate, and the resistor (41) having a positive temperature coefficient is provided, via an insulator (43), on the parallel-connected resistor (40-2) having a negative temperature coefficient.

## Revendications

1. Capteur de température à thermistor hybride sous la forme d'un dipôle constitué de résistances (10, 11; 20, 21; 30, 31; 40-1, 40-2, 41) qui varient en fonction de la température et qui sont en contacts thermique et électrique les unes avec les autres, chacune des résistances (10, 11; 20, 21; 30, 31; 40-1, 40-2, 41) ayant un coefficient de température positif ou négatif, dont la caractéristique température/résistance a dans une plage de température prescrite une courbe de résistance constante, et dans lequel au moins deux résistances (10, 11; 20, 21; 30, 31; 40-1, 40-2, 41), qui varient en fonction de la température, sont montées en série électriquement l'une avec l'autre par l'intermédiaire d'au moins une électrode (12; 22, 24; 32; 42-1, 42-2)
caractérisé en ce que,
il est utilisé pour l'électrode (12; 22, 24; 32; 42-1, 42-2), une matière conductrice de l'électricité en un oxyde-nitrure ou en un oxyde qui assure un contact à faible valeur ohmique entre les résistances (10, 11; 20, 21; 30, 31; 40-1, 40-2, 41) qui varient en fonction de la température, et qui forme une barrière de diffusion empêchant toute diffusion mutuelle des constituants des résistances, qui varient en fonction de la température et qui sont en contact, dans respectivement l'autre résistance qui varie en fonction de la température.

2. Capteur de température à thermistor suivant la revendication 1,
caractérisé,
en ce qu'il est utilisé comme matière d'électrode une matière choisie dans le groupe TiON, TiAlON, oxyde d'InSn.

3. Capteur de température suivant la revendication 1 ou 2, caractérisé
par un circuit série d'une résistance (10 ; 20 ; 30) qui varie en fonction de la température en ayant un coefficient de température négatif et d'une résistance (11 ; 21 ; 31) ayant un coefficient de température positif par l'intermédiaire d'une électrode (12 ; 22 ; 32) interposée entre elles.

4. Capteur de température suivant la revendication 3,
caractérisé
en ce que la résistance (10 ; 20) ayant un coefficient de température négatif sert de substrat pour l'électrode (12 ; 22) et pour la résistance (11 ; 21) ayant un coefficient de température positif.

5. Capteur de température suivant la revendication 3 ou 4 caractérisé
en ce que la résistance (11 ; 31 ; 41) ayant un coefficient de température positif est constituée sous la forme d'une plaquette d'une seule pièce.

6. Capteur de température suivant la revendication 3 ou 4 caractérisé
en ce que la résistance (21) ayant un coefficient de température positif est constituée sous la forme d'un élément à plusieurs strates.

7. Capteur de température suivant l'une des revendications 1 ou 2,
caractérisé
en ce qu'il est prévu une combinaison de résistances (30, 31) ayant des coefficients de température négatifs ou positifs sur un substrat (34) isolant.

8. Capteur de température suivant la revendication 1 ou 2, caractérisé
par une combinaison d'au moins trois résistances (40-1, 40-2, 41), chacune des résistances (40-1, 40-2, 41) ayant un coefficient de température négatif ou positif, et les résistances étant coupées électriquement entre elles par des électrodes (42-1, 42-2).

9. Capteur de température suivant la revendication 8,
caractérisé
par une combinaison de deux résistances (40-1, 40-2) ayant un coefficient de température négatif, et d'une résistance (41) ayant un coefficient de température positif, qui sont couplées électriquement entre elles par des électrodes (42-1, 42-2) de manière qu'une. résistance (40-1) à coefficient de température négatif soit en série avec un circuit parallèle d'une résistance (41) ayant un coefficient de température positif et d'une résistance (40-2) ayant un coefficient de température négatif.

10. Capteur de température suivant la revendication 9,
caractérisé
en ce que la résistance (40-1) ayant un coefficient de température négatif et montée en série est prévue comme substrat pour le circuit parallèle constitué de la résistance (40-2) ayant un coefficient de température négatif et de la résistance (41) ayant un coefficient de température positif, la résistance (40-2) montée en parallèle ayant un coefficient de température négatif est prévue sur la résistance (40-1) ayant un coefficient de température négatif montée en série et servant de substrat, et la résistance (41) ayant un coefficient de température positif est prévue par l'intermédiaire d'un isolant (43) sur la résistance (40-2) montée en parallèle ayant un coefficient de température négatif.
